# EUROPEAN PATENT SPECIFICATION

(11) **EP 1 631 815 B1**
(45) Date of publication and mention of the grant of the patent: **01.07.2020**
(21) Application number: 04735922.9
(22) Date of filing: 03.06.2004
(51) Int. Cl.: G01N 3/42, G01N 35/00, G01N 19/02, G01N 19/04

(54) **MATERIALS TESTING**
PRÜFUNG VON MATERIALEN
MATERIAUX SOUMIS A UN ESSAI

(30) Priority: 05.06.2003 GB 0312917; 10.06.2003 US 477060 P
(43) Date of publication of application: 08.03.2006
(73) Proprietor: CORN Products Development Inc., Westchester, IL 60154 (US)
(72) Inventor: McNICOL, Alan, Great Ayton, North Yordshire TS9 6JQ (GB); CARROL, John, Stockton-on-Tees TS17 0YA (GB); BAILEY, Robin Simon, Great Broughton, North Yorkshire TS9 7HG (GB)
(74) Representative: Meissner Bolte Partnerschaft mbB
(86) International application number: PCT/GB2004/002338
(87) International publication number: WO 2004/109258

(56) References cited:
- EP-A- 1 158 290
- US-A- 2 723 554
- US-A- 4 567 774
- US-A- 4 640 120
- US-A- 4 899 581
- US-A- 5 673 586
- US-A1- 2003 037 620
- US-A1- 2003 054 740

## Description

This invention relates to materials testing and particularly, although not exclusively, provides a method of testing a material and apparatus therefor.

There are numerous known methods of testing materials either as one-off samples or with a multiplicity of materials to be tested in an array. An example of an instrument for high-throughput measurement of material physical properties is described in EP 1 158 290 A (Symyx). The apparatus described in this document includes a moveable sample holder for containing an array of material samples, an array of probes for mechanically perturbing the array of material samples and a sensor for monitoring the response of the materials to mechanical perturbation by the probes. Further, US 2723554 describes a main housing for receiving a sample material over an opening and a cutting blade configured to penetrate the sample material, thus passing through the opening.

Disadvantageously, many known methods simply provide "pass/fail" results rather than any significant quantitative data. Additionally, in some cases, very expensive and complex apparatus is used.

It is an object of the present invention to address problems associated with materials testing.

According to a first aspect of the invention, there is provided a method of testing a material as defined in appended claim 1.

Said method preferably includes recording the force applied to said test material or a parameter relating to the force applied by said force applying means. The method may simply comprise assessing whether said test material passes or fails a test in which case only a single value for force applied may be recorded. The force may be measured to an accuracy of at least 5mN, preferably at least 2mN, more preferably at least lmN. Suitably, however, a multiplicity, preferably at least 10, more preferably at least 100, typically 500-1000, values for the force applied to said test material are recorded at different times during the testing of said material. Preferably, data relating to the force applied is recorded in a database, suitably under the control of a computer. Preferably, said computer controls the movement of said force applying means relative to said test material.

Preferably, the method involves said force applying means applying a force that deforms the test material. Preferably, data relating to the deformation of the test material is recorded in said database. Preferably, said data is related to the distance travelled by the force applying means relative to the test material. The distance travelled may be measured to an accuracy of at least 10µm, preferably to at least 5µm, more preferably to at least 2µm. Preferably, a multiplicity, more preferably at least 10, values for the distance travelled are recorded at different times during the testing of said material. Preferably, values for the force applied and distance travelled are taken substantially concurrently during the method.

Movement of the force applying means relative to the test material preferably involves movement in the direction of a z axis that is perpendicular to an x-y plane in which the test material is generally arranged. Preferably, movement of the force applying means relative to the test materials involves vertical movement. Preferably, the method involves moving the force applying means to apply said force to said material. Said force applying means preferably moves downwardly. Preferably, said test material is stationary (except for any movement, e.g. deformation, caused by said force applying means) during application of said force. Preferably, said force applying means moves in the direction of a z axis as described (e.g. vertically) during application of said force and preferably, is only moved vertically during application of said force (i.e. there is substantially no movement of said force applying means in an x-y plane which is perpendicular to said z axis (e.g. no horizontal movement) during application of said force).

The method may involve moving the test material to a position in which said force applying means may apply said force. Said test material is preferably moved in the x-y direction, suitably in a substantially horizontal plane. Said test material is suitably moved in the method so that the force applying means is directly above the region of the support member which is arranged to define said opening. Preferably, a z axis (e.g. a vertical axis) of said force applying means (which axis defines the direction in which the force applying means moves relative to the test material) is substantially in line with the centre of the region which is arranged to define said opening so that when said force applying means passes through the opening it passes substantially centrally through the opening. Movement of the test material to said position described is preferably under the control of a computer. The positioning of the test material in the desired position is described in more detail hereinafter.

Said force applying means comprises a probe (which is elongated and has its axis of elongation extending in the z direction (e.g. vertically) in which it is arranged to move) which moves in said z direction, e.g. substantially vertically) in the method and directly contacts said test material to apply said force thereto. Thus, the method preferably does not involve said force applying means applying said force via an intermediate member (e.g. a membrane) positioned between the force applying means, for example said probe, and said test material.

The method may involve constructing a force vs. extension relationship (e.g. graph) for the test material. The method may involve constructing a tensile stress vs. tensile strain relationship (e.g. graph) for the test material.

Said support member defines a receptacle for containing the test material and a region which is arranged to define said opening. Said opening may be positioned centrally within the receptacle, and is in a lower wall of the receptacle. More than one opening may be positioned within the receptacle, each being sufficiently remote from the periphery of the receptacle and from each other to ensure measurements are not affected by edge effects.

In one embodiment of the method, not forming part of the present invention, the test material may be arranged across a region of the support member which defines a said opening. This arrangement may be used when the properties of the test material are such that it does not sag into the opening during its formation and/or prior to it being tested, to any detrimental extent. Thus, in this case, the opening is unfilled prior to initiating movement of the force applying means. In the present invention, the opening is closed by a plug means, prior to the test material being tested. The method of closing may involve packing a filler material, suitably a low friction particulate material (e. g. lightly sintered PTFE) into the opening. The filler material is arranged to contact the test material and prevent it sagging into the opening but it is sufficiently friable to disintegrate under a small load. Thus, the plug means, during testing of a test material, will disintegrate by force applied to it. In one instance, the force applying means is placed in direct contact with the plug means and applies force to the test material through the intermediary of the remains of the plug means. In another instance, force is applied to the plug means through displacement of the test material as it is deformed and enters the opening in response to force applied to it by the force applying means. The presence of the plug means is found to have negligible effect on force measurements.

In a first embodiment, said test material may be preformed, for example it may comprise a film, and the method may include the step of selecting said preformed test material and positioning it across said region of said support member. Preferably, the test material is clamped in position, suitably between two clamp plates, one of which incorporates said support member. A plurality of different test materials, for example films, may be clamped between clamp plates in which a plurality of openings may be arranged. The force applying means may then be moved to address each test material associated with an opening, in order to apply a force to the test material. The method described may be useful for test materials that are reasonably robust so that they can be handled with little detriment.

In a second embodiment, the method may involve forming the test material in situ. In this case, a precursor of the test material may be selected and contacted with said support member; said test material, which is suitably in a different physical form compared to said precursor, may then be formed. For example, said test material may be a film that is formed from a precursor that is suitably a flowable material and may be a liquid, a viscous fluid, a gel (or the like), a suspension or a free flowing solid material. Said precursor may be dispensed by any suitable means. For example, it could be dispensed using ink jet printer technology or by sputtering. Said precursor may be cast on said support member and a solvent removed thereby to form the film. The precursor may include at least first and second components that are involved in the formation of the test material. In a series of tests, the identity, and/or amounts of the first and second components may be varied; and/or the processes to which the first and second components may be subjected may be varied; and/or the identity and/or amounts of other components may be varied with a view to affecting the properties of the test material formed. Advantageously, formation of test materials in situ eliminates the need to handle (and risk damaging) test materials and the method can be used to test brittle material that could not be tested by other methods.

In one embodiment of the invention, the method of testing a test material may comprise selecting a precursor of said test material; and contacting said precursor with said support member and forming said test material across a region of the support member in step (b).

The method comprises moving a force applying means comprising an elongated probe relative to said test material to apply a force to said material, wherein said elongated probe moves towards, passes into and/or passes through said channel prior to, during or after applying said force to said test material.

Said method of the first aspect may be a method of puncture testing, impact testing or adhesion testing.

In puncture testing, the method suitably involves moving said force applying means relative to the test material so that said force applying means penetrates the test material. After penetrating the material, said force applying means may pass into the opening. Before penetration, said force applying means is preferably spaced, for example in the direction of a z axis as described (e.g. vertically spaced), from said opening.

In puncture testing, a film is suitably supported on said support member, for example within a well, and the support member is arranged to define a said opening. In a preferred embodiment, the film is formed in situ in the well as described above. The method may involve determining the thickness of the film. This may be carried out using the force applying means. For example, the force applying means may be used to contact the film at a position which is not above the opening and the distance the force applying means moves to contact the film as compared to the distance it would have to move to contact the support member adjacent the opening may provide a measure of the thickness of the film. Alternatively, a non-contact method, for example, using a laser, may be used for determining thickness of some types of materials.

The puncture test involves the force applying means contacting the centre of the film, above the opening and then moving at a rate of less than 10mm/minute, preferably less than 5mm/minute, more preferably less than 2mm/minute to carry out the puncture test. The force applying means may move at a rate of at least 0.1mm/minute. Preferably, the test material is stationary and the force applying means moves.

The force applying means penetrates the test material and the method involves taking force and extension measurements during penetration The method may involve determining stiffness and toughness (energy to break) of the test material. In some cases, the method may involve undertaking a series of tests on test materials using force applying means (e.g. the probes referred to above), which have differing diameters. This enables the type of loading applied to the test materials to be varied from bending (in which the upper surface of the test material experiences compression while the lower surface is put under tensile loading) to shear loading as the diameter of the force applying means (in the region which contacts the test material) increases and approaches the diameter of said opening below. The force applying means could be used to make electrical measurements on contacting the test material. This may be useful for investigating conductive adhesives. In impact testing, said force applying means may be moved at high speed towards the test material so that the material is punctured very rapidly. Force measurements are made to assess characteristics of the test material under impact.

In adhesion testing, the method suitably involves contacting the test material with a surface and then moving the force applying means relative to the test material to cause the test material to move away from the surface. In this case, the force applying means may pass into the opening before contacting the test material.

In adhesion testing, the force applying means is moved relatively slowly, towards the stationary test material. The force applying means slowly deforms and/or causes delamination of the test material and the method involves measuring the force applied and distance travelled by the force applying means. The energy per unit area (ie the energy to delaminate a unit area of adhesive) may be determined which is a measure of adhesive strength. Alternatively, rather than determining absolute values, the method may be used to rank a series of test materials.

Preferably, said method according to said first aspect involves testing a plurality of test materials, as defined in dependent claim 18.

Said support member may include at least 6, preferably at least 10, more preferably at least 15 regions across which test materials are arranged. Said support member preferably defines an array of said regions which regions are preferably arranged in parallel rows. Said support member may be in the form of a well plate in which said regions are defined.

Preferably, the method includes the step of the same force applying means applying a respective said force to each of said plurality of test materials in turn. Thus, the method preferably includes said force applying means applying a force to a first material of said plurality of test materials; and then said force applying means moves relative to said test materials so that it can apply a force to a second material of said plurality of test materials. Although the force applying means itself could move between said first and second materials, the method preferably includes the step of moving said support member to enable said force applying means to apply said force to first and second materials as described. Suitably, said support member is arranged to move (in the direction of an x-y plane (e.g. substantially horizontally) in the method in order to allow the force applying means to apply said force (suitably in a z direction perpendicular to the x-y plane, e.g. vertically) to said plurality of test materials. Preferably, in the method, the force applying means is not moved in said x-y plane (e.g. horizontally) between the application of respective forces to said first and second materials.

Preferably, the method involves recording data relating to each test material in a database.

Preferably, a computer controls the movement of said force applying means relative to each test material. Preferably, the computer is programmed to accurately position the force applying means so that it may apply a force to a test material and pass centrally towards, into and/or through the opening. The method suitably involves the use of a positioning method to achieve this.

The positioning method may involve real-time centring with accurate detection of the opening, for example using a camera and/or a technique using electromagnetic waves.

The positioning method may involve the computer storing a map of said support member that suitably includes the position of each opening and may include the position of one or more reference markers on the support member. In one embodiment, the support member may be very accurately manufactured so that the position of each opening is accurately predetermined. In an alternative embodiment, before any support member is used in the testing of materials, it may be mapped in a mapping procedure.

The mapping procedure preferably includes the steps of recording coordinates for the centres of each opening and assessing the depth of each opening below a surface, for example an upper surface of the support member. For example, when the support member defines a plurality of receptacles, as is preferred, the depths of the receptacles may be determined. The mapping procedure may involve recording coordinates for one or a plurality of reference markers on the support member.

The mapping procedure preferably involves the force applying means moving relative to the support member to contact the support member to enable said coordinates to be determined. Said force applying means preferably moves in the direction of a z axis (e.g. vertically) as described. Additionally, the mapping procedure preferably involves said support member being moved so that different areas thereof are presented to the force applying means to be contacted by said means thereby to map said support member.

After a support member has been mapped, it may be used in testing a material as described. In this case, the support member is selected; the map of the member is called up on the computer; and then the computer controls movement of the force applying means and/or support member to position the aforesaid with respect to reference points on the support member. The centres of the openings (which determines the required x-y positions of the force applying means relative to the support member during a test) are then taken from the stored map enabling the force applying means to be positioned above the centres of the regions which define openings and the method can then be carried out. The method may include the step of measuring the thickness of each test material supported on the support member. According to a second aspect of the invention, there is provided apparatus for testing a material as defined in appended claim 23.

Said apparatus is preferably for carrying out the method described above and may have any feature described above utilized in carrying out said method.

Said support member is preferably movable in the x-y direction suitably in a horizontal plane, for positioning the opening(s) relative to the force applying means. Said force applying means may be movable in the z direction, perpendicular to an x-y plane (e.g. preferably substantially vertically), to apply said force.

Said apparatus preferably includes a computer. Said computer preferably includes an output for controlling movement of the force applying means relative to the support member; and an input for receiving data relating to the force applied and the reaction of the test material to the force applied. Said computer preferably controls the movement of the support member and said force applying means. A database of parameters is preferably associated with said computer. Said database preferably includes coordinates for each opening associated with said support member. Said computer is preferably arranged to control movement of the support member according to said coordinates stored in said database to enable said force applying means to apply a force to a test material.

Said apparatus preferably includes first measurement means for measuring the force applied by said force applying means and preferably includes second measurement means for measuring the distance travelled by said force applying means during a test. Said first and second measurement means are preferably arranged to communicate with said computer and/or database so that measurements taken can be stored.

Said database preferably includes means for storing information relating to the identity of each test material tested using the apparatus. The information stored may include details on the chemical identity of the test materials and/or processes used in their preparation.

In a preferred embodiment, said support member comprises a well plate which includes an array of receptacles each of which includes a respective said opening into and/or through which said force applying means is arranged to pass in use. The apparatus is preferably arranged to test materials positioned in each receptacle.

Specific embodiments of the invention will now be described, by way of example, with reference to the accompanying diagrammatic drawings, in which:
Figure 1, not forming part of the present invention, is a schematic view of apparatus for carrying out a puncture screen;
Figure 2 is a schematic representation of the force extension curve obtained from a typical puncture screen;
Figures 3(a) and 3(b), not forming part of the present invention, are a section view and plan view respectively of an indentor contacting a film to illustrate bi-axial loading;
Figure 4 is a schematic representation of apparatus for carrying out high- throughput testing of films;
Figure 5 is a top plan view of a 4x4 well plate.
Figure 6 is a graph of force vs. extension for two materials;
Figure 7a, not forming part of the present invention, is an exploded perspective view of a clamping device for free standing films;
Figure 7b, not forming part of the present invention, is an enlarged cross-sectional view of circled region VII in Figure 7a with the clamping device assembled;
Figures 8(a) to (d) show steps in plugging channels in a well plate to facilitate film formation; and
Figures 9(a) to 9(c) show the preparation of a well plate for adhesion testing of a material and Figure 9(d) illustrates an adhesion test.

In the Figures, the same or similar parts are annotated with the same reference numerals.

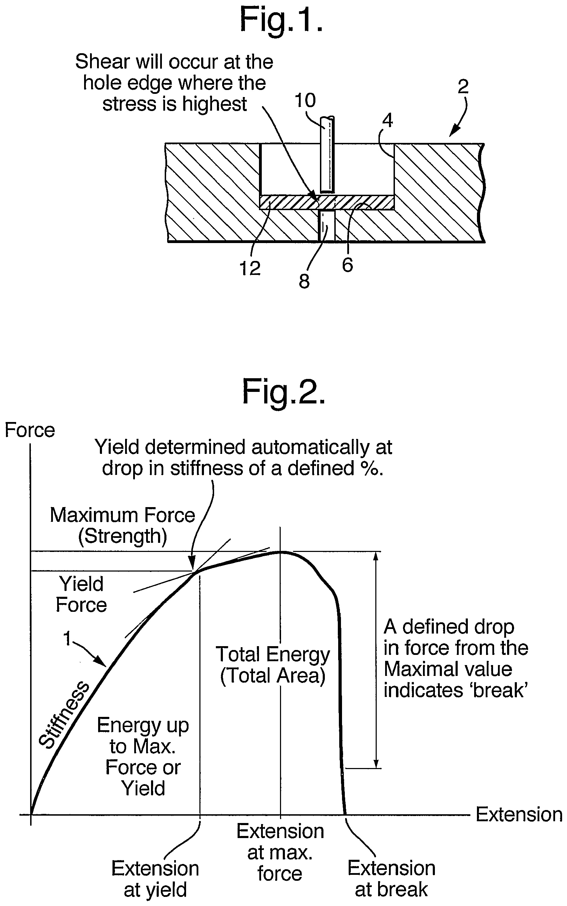

Referring to Figure 1, apparatus for testing a film comprises a well plate 2 in which a well 4 is arranged. A base wall 6 of the well 4 includes a circular cross-section channel 8 which is arranged to accommodate an indentor 10 which is used to apply a force to a film 12, positioned in the well 4, to indent and puncture the film. The apparatus is able to make very accurate force measurements that can be used to calculate various physical properties of the film.

The apparatus described may be used to undertake both an indentation screen and a puncture screen of films and a force-extension curve may be constructed as shown in Figure 2. In this regard, the indentor 10 initially contacts the film 12 and is moved downwardly at a rate of the order of 1 to 2mm/minute to indent the film. Advantageously, since the film is not supported on a hard substrate (which is often the case in indentation tests) the force is directly related to properties of the film. During movement of the indentor, the force and the displacement are measured and the results can be used to assess the stiffness (slope of the initial part of the curve as indicated by the reference numeral 1 in Figure 2) of the force/displacement curve which is a system property and a function of geometry which is suitable as a comparator for use in screening materials and through finite element analysis (FEA) leads to material properties.

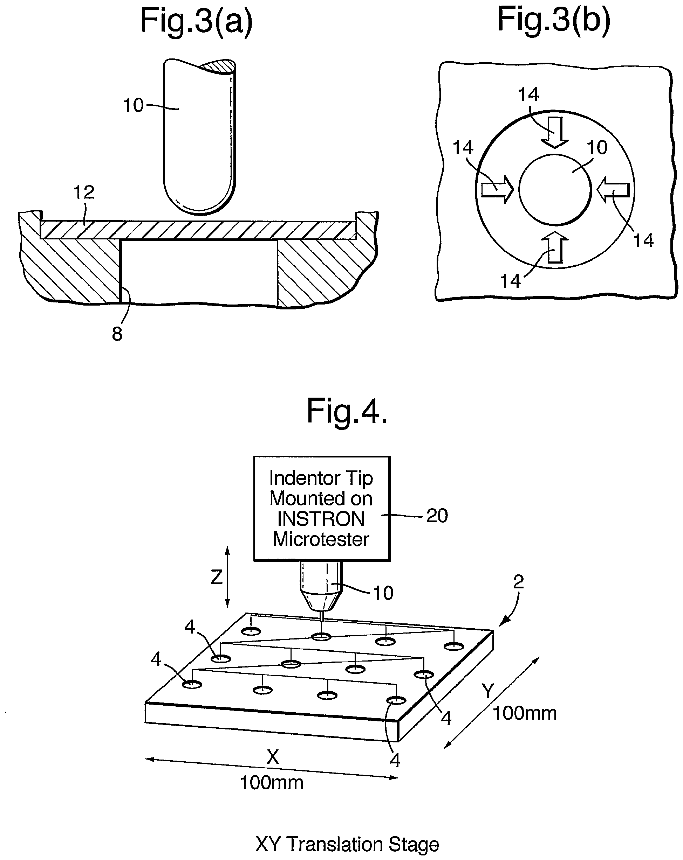

The movement of the indentor is continued to assess the toughness of the film by measuring the energy required to puncture the film. Since the film thickness influences the toughness value, the thickness is recorded to allow normalisation of results. A stiffness value can also be derived from the data acquired from the puncture test. The nature of the stress imposed on the film is determined by the cross-sectional area of the indentor 10 relative to that of the channel 8 - the closer the two are in size, the greater the ratio of shear to tensile stress component. Since the position of the indentor within the hole also influences the stress imposed on the film, the indentor should be axially aligned with the centre of the channel 8 during the test to prevent variations of results between different test samples. Such alignment results in "biaxial loading" of the film as represented in Figures 3(a) and (b). If, for example, a 350*µ*m diameter indentor 10 is used to indent/puncture a film of 80*µ*m nominal (or any) thickness, a biaxial stress field is generated as represented by arrows 14.

Using indentors of different diameters also allows the type of loading to be changed from bending (in which the upper surface of the film 12 experiences compression while the lower surface is put under tensile loading) to shear loading as the indentor diameter increases and approaches the diameter of the channel below. This may have application in testing materials that require their shear behaviour to be measured.

Figure 2 details a number of parameters that may be obtained from the force-extensive curve to allow different films tested to be compared.

The indentor 10 is controlled by a Universal Testing Machine, for example an Instron MicroTester (Trade Mark) obtained from Instron of Massachusetts, USA. The instrument is capable of vertical movement (z axis) to within a micron accuracy and very sensitive force measurements (nominally accuracy is as good as 0.5mN provided the instrument is isolated from mechanical noise). The Instron instrument includes a software package (Merlin (Trade Mark)) which enables the Instron MicroTester to be controlled and data to be acquired and stored.

The apparatus described above may be configured for the high-throughput screening of films. This is illustrated schematically in Figure 4. Referring to Figure 4, well plate 2 includes an array of wells 4 (only some of which are shown in Figure 4) in which films may be arranged. The well plate 2 is mounted on an x-y translation stage (not shown) which is arranged to move the well plate so that each well 4 may be positioned underneath the indentor 10 of the Instron Microtester which is arranged in a fixed x-y position. The x-y translation stage was a Newport (Trade Mark) x-y stage obtained from Newport Ltd that is capable of 1 *µ*m positional resolution (4*µ*m positional accuracy) and a total movement of 200 by 100mm so that it may tranverse all samples in the array. The indentor 10 can then move in the z-direction as described above to contact and test films in the wells. The movement of the Instron MicroTester and the x-y stage are controlled by software and any reference points, test positions and results are stored in a database.

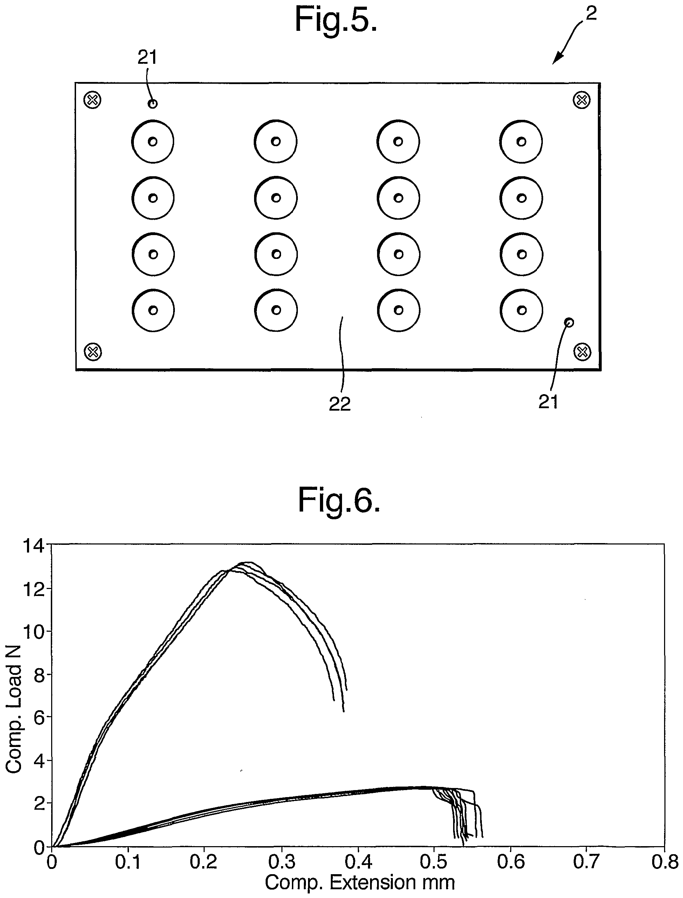

As described above with reference to Figure 3, to achieve accurate reproducible results, the indentor 10 needs to be axially aligned with the centre of the channel 8. A first step involved in achieving this is to map a plate to be used (e.g. plate 2 of Figure 5), as follows:
First a new entry is made in the database with the nominal positions of all required reference and test positions. Then the actual positions are measured. In the first stage of this process, the software directs the Instron MicroTester and x-y stage to measure the height (z value) of several predefined reference points on the surface plane 22 of the well plate 2 (for example a part of diagonally arranged reference points may be addressed). The positions of the reference holes (eg 21 in Figure 5) are then determined using their nominal positions (all input prior to the start) and a centre detection algorithm to refine the supplied co-ordinates.

The centre detection algorithm finds the centre and radius of the holes/channels by identifying three or more points on the circumference of a hole/channel. These can be found by conducting a series of surface height measurements, at various x-y positions (which are calculated systematically by the software) in the area where the hole/channel is known to be. The first measurement is the surface height around the hole/channel (for reference in the hole detection and to provide well depth information). Subsequent surface height positions, in conjunction with surface and well floor height information, allow the software to identify those x-y positions where the indentor goes into the hole/channel. Points on the circumference of the hole can be identified by seeking transitions from 'in' to 'outside' of the hole/channel. Once a transition is found, its position is refined by making further surface position measurements between the known 'in' and 'out' points until the position is known to within a predefined accuracy (the accuracy limit is dependent on the x-y stage positioning accuracy). Once sufficient points have been identified, a least squares fit is employed to determine the centre and radius of the hole/channel. Validity is checked by comparing the measured radius to the nominal value and further points may be measured to improve the fit if required.

The position and radius of every reference hole and channel may be measured as described.

Usually two reference holes are present at the top left and bottom right corners of the well plate. The origin of the co-ordinate system is reset to the measured centre position of a nominated reference hole. The depths of the wells are determined relative to a least squares fit of the surface plane.

All of the data collected in the manner described makes up a unique "plate definition" which is stored in the database. Unique plate definitions may be determined for a number of plates.

After a "plate definition" has been determined for a particular plate, the plate can be used in the high-throughput screening of films. At the start of the screening, the plate definition for the particular plate chosen is selected from a list stored in the database and the user is asked to approximately position the indentor tip over each reference hole in turn. The software then determines the position of the surface plane of the plate and locates the centre of the nominated reference hole. The co-ordinate system is then corrected for any rotation by comparison of the position of the reference holes (not including the origin point) in the stored plate definition and the new measurement. The centres of the channels can then be looked up in the database from the stored plate definition.

A wide range of types of films may be investigated: for example, a series of polyurethane/acrylic dispersions may be prepared in a combinatorial technique and data relating to the preparation stored in a database so that each film can be identified. In one embodiment, a predetermined amount of each liquid dispersion may then be pipetted into a selected well 4 in the well plate 2 and, optionally, the well plate 2 may be oscillated gently to facilitate consistent film formation. Each film 12 is formed over a channel 8 as represented in Figure 3(a). It will be appreciated that the diameter of channel 8 and the material from which the well plate 2 is made (particularly in the area around the channels 8) will affect formation of the film and whether it extends across the channel as shown in Figure 3(a) or sags into the channel. Suitably, the well plate 2 is optimised to reduce the tendency of the film to sag into the channel and, therefore, aid the collection of accurate test results. The amount of sag is determined during testing and if it is greater than 15% of the thickness of the film, the results from the testing of the film are discarded.

After respective films have been formed, the thickness of them may be determined. As described above, during mapping of the well plate, the surface plane of the plate is identified (by a least squares fit on several surface position measurements) and the position of the floor in each well is measured. This allows the well depths to be calculated by simple subtraction. To determine the film thickness, the well depths are re-measured in a similar way and since the floor position will be higher by the thickness of the film, a comparison of the well depths with and without films will yield the film thickness.

Next, each film may be addressed in turn, under computer control, by the software causing the x-y stage to move so that the indentor 10 is positioned centrally above a selected channel 8. Then, the indentor moves downwardly to contact and test the film 12 as described above and the results are used to calculate properties of the film. The x-y stage then positions each channel accurately below the indentor in turn and each film is tested as described.

As an alternative to mapping plates and then the computer using the map to position the Instron Microtester over the centres of channels 8, accurately manufactured plates wherein the centres of the channels are known may be used. Alternatively, machine vision may be used. In this case, an image of each channel 8 is acquired using a camera and image analysis software is used to derive size and positional information. Since the camera will need to be offset from the indentor 8, the respective relative positions of camera and indentor must be accurately known so that the position of the channel relative to the indentor can be calculated.

After each film has been tested, the database will store all relevant information on each film, for example, relating to the process for its preparation; the materials used in its preparation; its thickness; and the results of the indentation and puncture tests which enable physical properties of the film to be determined. A force-extension curve may be produced as shown in Figure 2. Also, materials may be compared as shown in Figure 6

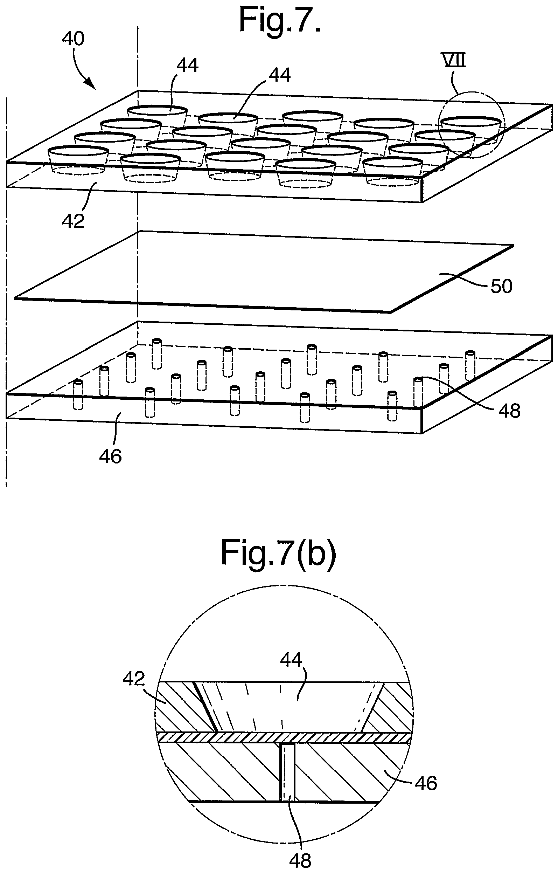

Preformed films of materials may be evaluated using the clamping device shown in Figure 7. Referring to Figure 7, the device 40 includes an upper clamping plate 42 in which an array of inwardly tapering openings 44 are defined, and a lower clamping plate 46 in which an array of narrower cylindrical openings 48 are defined. The centre of each opening 48 is aligned with the centre of a respective opening 44. A film 50 to be evaluated is clamped between upper and lower plates 42, 46, with the plates being secured by bolts (not shown) that extend therethrough. An indentor 10 may then be used to test the film as described above.

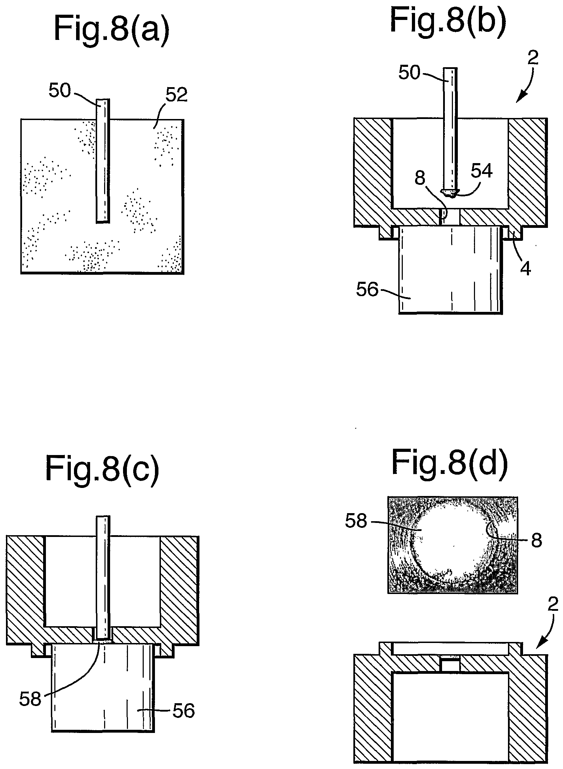

As described above, it is preferred to minimise any sag of films into the channels in the well plate. Some film materials may have a greater tendency to sag than others. In this case, the apparatus and process for preparing the films may be modified as described below with reference to Figure 8.

Figure 8(a) shows a rod 50 being dipped into PTFE powder 52 so that a small amount 54 of the powder can be picked up on the end of the rod as shown in Figure 8(b). Figure 8(b) shows parts of an inverted well plate 2 in which a well 4 and circular cross-section channel 8 are defined. A stopper 56 is used to close the channel 8 and then the rod is inserted into channel 8 and used to position and compact the powder against the stopper 56 to define a plug 58 which closes the channel, as shown in Figure 8(c). The well plate 2 may be returned to its normal position as shown in Figure 8(d) whereupon it is ready for a film to be cast over the channel 8. Figure 8(d) also shows a plan view micrograph of a plug 58.

The identity of the powder (e.g. PTFE), the particle sizes, and the amount used in channel 8 are selected so that the powder will support the film during its formation and prevent sag into the channel. Nonetheless, when the film is indented and/or penetrated by the indentor 10, the powder can fall from the channel on application of a relatively small force. Thus, the presence of the powder will not affect significantly the validity of the test results achieved using the Instron MicroTester and/or the test results can be adjusted to take into consideration the presence of the PTFE, if necessary.

The use of indentation and puncture testing as described above has shown advantages over conventional tensile techniques and is particularly evident for reproducibility. Tensile testing of fracture mechanics measurements for delicate film specimens requires meticulous specimen preparation, especially from films. Brittle films are particularly prone to variability in the quality of the free edges of specimens, from which failures can be initiated if notches are present. In ductile films this can promote local yielding due to stress concentration, and this leads to high levels of scatter in the yield and post yield behaviour.

However, in the methods described, whether the film is clamped in place and held over a hole by a clamping plate (for free standing film) shown in Figure 7, or by casting the film in a well plate (Figures 1, 3, 4, 5 and 8), there are no free edges from which to initiate fracture or premature yielding.

Data collected using the methods described shows an extremely high level of reproducibility. Furthermore, data for very brittle films (which would be very difficult to obtain using conventional methods which would necessitate the films to be cast and then positioned in a test apparatus) can be obtained by casting the films in wells and testing the films in the same wells without them being moved to a separate location.

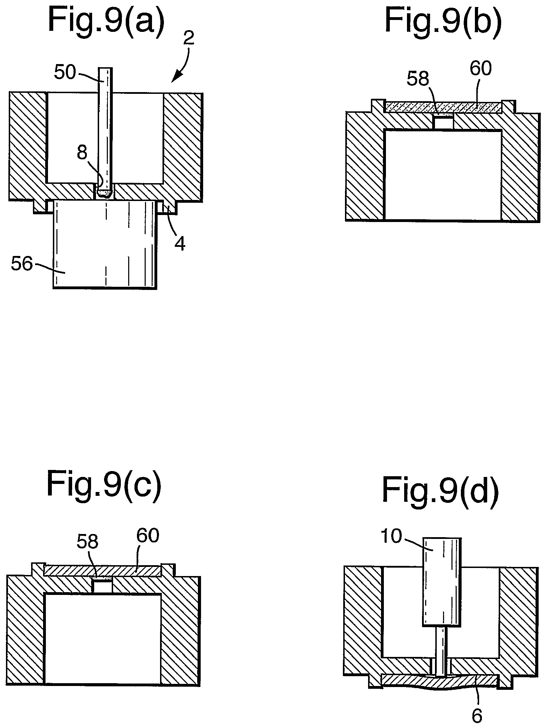

Figures 9(a) to (d) show the steps involved in carrying out an adhesion screen of a material. Figure 9(a) shows the closing of channel 8 with PTFE which is accomplished as described with reference to Figures 8(a) and (b). The well plate 2 (which in this case is made of an appropriate material against which an adhesive material is to be assessed) is returned to its normal position as shown in Figure 9(b) and the well is filled with a candidate adhesive 60 which is cured or conditioned thereby to define a test material (Figure 9(c)). The well plate 2 is then inverted as shown in Figure 9(d) and indentor 10 is moved downwardly to contact the plug 58 thereby to apply a force to the adhesive to cause it to pull away from base wall 6. During the test, the force applied and the distance travelled by the indentor are monitored and data recorded in a database. From data recorded, characteristics of the adhesive may be determined.

In some cases, there may be a risk that indentor 10 may puncture the adhesive rather than delaminate it. To overcome this, a reinforcing material, for example a foil, may abut and be positioned below (with reference to Figure 9(d)) the adhesive to promote adhesive failure rather than puncturing.

Apparatus (not shown) but similar to that used in the puncture test may be used in the impact testing of a material. The test involves causing an indentor 10 to contact a test material at high speed to penetrate it and undertaking relevant measurements during the test.

## Claims

1. A method of testing a material, the method comprising:
(a) providing a support member (2) wherein said support member (2) defines at least one receptacle (4) for containing a test material, the base wall (6) of the at least one receptacle (4) comprising an opening (8) in the form of a channel, wherein said channel (8) is closed by a plug means (58) prior to the test material being provided;
(b) providing the test material across a region of said support member (2) which defines said opening (8) and within the at least one receptacle; and
(c) moving a force applying means comprising an elongated probe (10) having its axis of elongation extending in the direction in which it is arranged to move relative to said test material to apply a force to said test material; wherein said elongated probe (10) moves towards, passes into and/or passes through said channel (8) prior to, during or after applying said force to said test material.

2. A method according to claim 1, which includes recording the force applied to said test material or a parameter relating to the force applied by said force applying means (10).

3. A method according to claim 1 or claim 2, wherein a multiplicity of values for the force applied to said test material are recorded at different times during the testing of said material.

4. A method according to any preceding claim, wherein data relating to the force applied is recorded in a database under the control of a computer and said computer also controls the movement of said force applying means (10) relative to said test material.

5. A method according to any preceding claim, wherein said elongated probe (10) applies a force that deforms the test material.

6. A method according to any preceding claim, wherein said test material is stationary during application of said force by said elongated probe (10).

7. A method according to any preceding claim, wherein a z axis of said elongated probe (10) which axis defines the direction in which the elongated probe (10) moves relative to the test material, is substantially in line with the centre of the region which is arranged to define said channel (8) so that when said elongated probe (10) passes through the channel (8), it passes substantially centrally through the channel (8).

8. A method according to any preceding claim, wherein said elongated probe (10) directly contacts said test material to apply said force thereto.

9. A method according to any preceding claim, which includes the step of constructing a force vs. extension relationship for the test material or a tensile stress vs. tensile strain relationship for the test material.

10. A method according to any preceding claim, wherein said test material is preformed and the method includes the step of selecting said preformed test material and positioning it across said region of said support member (2) which is arranged to define said channel (8).

11. A method according to any one of claims 1 to 10, which includes selecting a precursor of said test material, and contacting said precursor with said support member (2) and forming said test material across said region of the support member (2), in step (b).

12. A method according to any of claim 11, wherein said precursor is in a different physical form compared to said test material, and wherein said test material forms on said support member (2) after contact of the precursor therewith.

13. A method according to claim 12, wherein said precursor includes at least first and second components which are involved in the formation of the test material.

14. A method according to claim 13, wherein, in a series of tests, the identity, and/or amounts of the first and second components are varied; and/or the processes to which the first and second components are subjected are varied; and/or the identity and/or amounts of other components are varied, with a view to affecting the properties of the test materials formed.

15. A method according to any preceding claim, which is a method of puncture testing, impact testing or adhesion testing.

16. A method according to claim 15, wherein a method of puncture testing includes the step of moving said elongated probe (10) relative to the test material so that said elongated probe (10) penetrates the test material, wherein force and extension measurements are made during the penetration.

17. A method according to claim 15, wherein a method of adhesion testing involves contacting the test material with a surface and then moving the elongated probe (10) relative to the test material to cause the test material to move away from the surface.

18. A method according to any preceding claim, wherein said method comprises providing a plurality of test materials across said support member (2) wherein said support member (2) defines a plurality of receptacles (4) for containing the plurality of test materials, the base wall (16) of each receptacle (4) comprising a channel (8) closed by a plug means (58) prior to the test material being provided.

19. A method according to claim 18, wherein said support member (2) defines an array of said receptacles (4) arranged in parallel rows.

20. A method according to claim 19, wherein the same elongated probe (10) is used to apply a respective said force to each of said plurality of test materials in turn.

21. A method according to any of claims 18 to 20, which includes the step of moving said support member (2) to enable said elongated probe (10) to apply said force to first and second materials included in said plurality of test materials.

22. A method according to any of claims 18 to 21, wherein the movement of said elongated probe (10) relative to each test material is controlled by a computer.

23. Apparatus for testing a material, the apparatus comprising:
(i) a support member (2) which defines at least one receptacle (4) for containing the test material, the base wall (6) of said at least one receptacle (4) comprising one or a plurality of openings (8) in form of channels,
(ii) plug means (58) for closing said channels (8) prior to the test material being provided,
and wherein said support member (2) is arranged to support test materials; and
(iii) an elongated probe (10) having its axis of elongation extending in the direction in which it is arranged to move which is movable relative to the support member (2) for applying a force to a test material supported therein in use; wherein said elongated probe (10) is arranged to move towards, to pass into and/or to pass through said one or plurality of channels (8) in use prior to, during or after applying a force to the test material.

24. Apparatus according to claim 23, which includes a computer.

25. Apparatus according to claim 24, wherein said computer includes an output for controlling movement of the elongated probe (10) relative to the support member (2); and an input for receiving data relating to the force applied and the reaction of the test material to the force applied.

26. Apparatus according to any of claims 24 or 25, wherein said computer controls the movement of the support member (2) and said elongated probe (10).

27. Apparatus according to any of claims 23 to 26, said apparatus including first measurement means for measuring the force applied by said elongated probe (10) and second measurement means for measuring the distance travelled by said elongated probe (10) during a test.

28. Apparatus according to claim 27, wherein said first and second measurement means are arranged to communicate with a computer which includes means for storing information relating to the identity of each test material tested using the apparatus and means for storing measurements taken.

29. Apparatus according to any of claims 23 to 28 wherein said support member (2) comprises a well plate which includes an array of receptacles (4).

## Patentansprüche

1. Verfahren zum Testen eines Materials, wobei das Verfahren umfasst:
(a) Bereitstellen eines Trägerelementes (2), wobei das Trägerelement (2) wenigstens einen Behälter (4) zum Aufnehmen eines Testmaterials definiert, wobei die Basiswand (6) des wenigstens einen Behälters (4) eine Öffnung (8) in der Form eines Kanals umfasst, wobei der Kanal (8) durch ein Stopfenelement (58) verschlossen ist, bevor das Testmaterial bereitgestellt wird;
(b) Bereitstellen des Testmaterials über einen Bereich des Trägerelementes (2), der die Öffnung (8) definiert, und in dem wenigstens einen Behälter und
(c) Bewegen eines Kraft anwendenden Mittels, das eine längliche Sonde (10) umfasst, die eine Elongationsachse hat, die sich in die Richtung erstreckt, in welcher sie angeordnet wird, um sich relativ zu dem Testmaterial zu bewegen, um eine Kraft auf das Testmaterial anzuwenden; wobei die längliche Sonde (10) vor, während oder nach Anwenden der Kraft auf das Testmaterial sich in Richtung des Kanals (8) bewegt, in den Kanal (8) eintritt und/oder durch den Kanal (8) geht.

2. Verfahren nach Anspruch 1, das Aufzeichnen der Kraft, die auf das Testmaterial angewendet wird, oder eines Parameters, der mit der Kraft, die durch das Kraft anwendende Mittel (10) angewendet wird, in Beziehung steht, umfasst.

3. Verfahren nach Anspruch 1 oder Anspruch 2, wobei eine Vielzahl von Werten für die Kraft, die auf das Testmaterial angewendet wird, zu verschiedenen Zeiten während des Testens des Materials aufgezeichnet wird.

4. Verfahren nach irgendeinem vorangehenden Anspruch, wobei Daten, die die angewendete Kraft betreffen, in einer Datenbank unter der Steuerung eines Computers aufgezeichnet werden und der Computer auch die Bewegung des Kraft anwendenden Mittels (10) relativ zu dem Testmaterial steuert.

5. Verfahren nach irgendeinem vorangehenden Anspruch, wobei die längliche Sonde (10) eine Kraft anwendet, die das Testmaterial verformt.

6. Verfahren nach irgendeinem vorangehenden Anspruch, wobei das Testmaterial während der Anwendung der Kraft durch die längliche Sonde (10) stationär ist.

7. Verfahren nach irgendeinem vorangehenden Anspruch, wobei eine z-Achse der länglichen Sonde (10), welche Achse die Richtung definiert, in der sich die längliche Sonde (10) relativ zu dem Testmaterial bewegt, im Wesentlichen in Übereinstimmung mit der Mitte der Region ist, welche angeordnet ist, um den Kanal (8) zu definieren, so dass die längliche Sonde (10), wenn sie durch den Kanal (8) geht, im Wesentlich zentral durch den Kanal (8) geht.

8. Verfahren nach irgendeinem vorangehenden Anspruch, wobei die längliche Sonde (10) mit dem Testmaterial direkt in Kontakt kommt, um die Kraft darauf anzuwenden.

9. Verfahren nach irgendeinem vorangehenden Anspruch, das den Schritt des Aufbauens einer Kraft-vs.-Dehnung-Beziehung für das Testmaterial oder einer Zugspannung-vs.-Zugbelastung-Beziehung umfasst.

10. Verfahren nach irgendeinem vorangehenden Anspruch, wobei das Testmaterial vorgeformt wird und das Verfahren den Schritt des Auswählens des vorgeformten Materials und des Positionieren desselben über den Bereich des Trägerelementes (2), der angeordnet ist, um den Kanal (8) zu definieren, umfasst.

11. Verfahren nach irgendeinem der Ansprüche 1 bis 10, das Auswählen eines Vorläufers des Testmaterials und Inkontaktbringen des Vorläufers mit dem Trägerelement (2) und Bilden des Testmaterials über den Bereich des Trägerelementes (2) in Schritt (b) umfasst.

12. Verfahren nach Anspruch 11, wobei der Vorläufer im Vergleich zu dem Testmaterial in einer unterschiedlichen physikalischen Form ist und wobei das Testmaterial sich auf dem Trägerelement (2) nach Kontakt des Vorläufers damit bildet.

13. Verfahren nach Anspruch 12, wobei der Vorläufer wenigstens erste und zweite Komponenten umfasst, die bei der Bildung des Testmaterials involviert sind.

14. Verfahren nach Anspruch 13, wobei, in einer Testreihe, die Identität und/oder Mengen der ersten und zweiten Komponenten geändert wird/werden; und/oder die Prozesse, denen die ersten und zweiten Komponenten unterzogen werden, geändert werden; und/oder die Identität und/oder Mengen anderer Komponenten geändert werden, und zwar mit dem Ziel, die Eigenschaften der gebildeten Testmaterialien zu beeinflussen.

15. Verfahren nach irgendeinem vorangehenden Anspruch, das ein Verfahren zur Durchschlagprüfung, zur Schlagzähigkeitsprüfung oder zur Adhäsionsprüfung ist.

16. Verfahren nach Anspruch 15, wobei ein Verfahren zur Durchschlagprüfung den Schritt des Bewegens der länglichen Sonde (10) relativ zu dem Testmaterial umfasst, so dass die längliche Sonde (10) das Testmaterial durchdringt, wobei während der Durchdringung Kraft- und Dehnungsmessungen durchgeführt werden.

17. Verfahren nach Anspruch 15, wobei ein Verfahren zur Adhäsionsprüfung Inkontaktbringen des Testmaterials mit einer Oberfläche und danach Bewegen der länglichen Sonde (10) relativ zu dem Testmaterial, um zu bewirken, dass sich das Testmaterial von der Oberfläche wegbewegt, involviert.

18. Verfahren nach irgendeinem vorangehenden Anspruch, wobei das Verfahren umfasst: Bereitstellen einer Vielzahl von Testmaterialien in dem gesamten Trägerelement (2), wobei das Trägerelement (2) eine Vielzahl von Behältern (4) zur Aufnahme einer Vielzahl von Testmaterialien umfasst, wobei die Basiswand (16) jedes Behälters (4) einen Kanal (8) umfasst, der durch ein Stopfenelement verschlossen ist, bevor das Testmaterial bereitgestellt wird.

19. Verfahren nach Anspruch 18, wobei das Trägerelement (2) einen Array der Behälter (4), die in parallelen Reihen angeordnet sind, definiert.

20. Verfahren nach Anspruch 19, wobei dieselbe längliche Sonde (10) verwendet wird, um eine entsprechende Kraft auf jedes der Vielzahl von Testmaterialien der Reihe nach anzuwenden.

21. Verfahren nach irgendeinem der Ansprüche 18 bis 20, das den Schritt des Bewegens des Trägerelementes (2) umfasst, um zu ermöglichen, dass die längliche Sonde (10) Kraft auf die ersten und zweiten Materialien, die in der Vielzahl von Testmaterialien enthalten sind, anwendet.

22. Verfahren nach irgendeinem der Ansprüche 18 bis 21, wobei die Bewegung der länglichen Sonde (10) relativ zu jedem testmaterial durch einen Computer gesteuert wird.

23. Vorrichtung zum Testen eines Materials, umfassend:
(i) ein Trägerelement (2), das wenigstens einen Behälter (4) zum Enthalten des Testmaterials definiert, wobei die Basiswand (6) des wenigstens einen Behälters (4) eine oder eine Vielzahl von Öffnung(en) (8) in Form von Kanälen umfasst,
(ii) Stopfenelement (58) zum Verschließen der Kanäle (8), bevor das Testmaterial bereitgestellt wird,
und wobei das Trägerelement (2) angeordnet ist, um Testmaterialien zu tragen, und
(iii) eine längliche Sonde (10), die eine Elongationsachse hat, die sich in die Richtung erstreckt, in welcher sie angeordnet wird, um sich zu bewegen, die relativ zum Trägerelement (2) zur Anwendung einer Kraft auf ein Testmaterial, das darin getragen wird, bei Verwendung beweglich ist; wobei die längliche Sonde (10) ausgelegt ist, um vor, während oder nach Anwenden einer Kraft auf das Testmaterial sich in Richtung des einen Kanals oder der Vielzahl von Kanälen (8) zu bewegen, in diese(n) einzutreten und/oder durch diese(n) zu gehen.

24. Vorrichtung nach Anspruch 23, die einen Computer umfasst.

25. Vorrichtung nach Anspruch 24, wobei der Computer einen Output zur Steuerung der Bewegung der länglichen Sonde (10) relativ zu dem Trägerelement (2) und einen Input zum Empfang von Daten, die die angewendete Kraft und die Reaktion des Testmaterials, auf das die Kraft angewendet wird, betreffen, umfasst.

26. Vorrichtung nach irgendeinem der Ansprüche 24 oder 25, wobei der Computer die Bewegung des Trägerelementes (2) und der länglichen Sonde (10) steuert.

27. Vorrichtung nach irgendeinem der Ansprüche 23 bis 26, wobei die Apparatur erste Messmittel zur Messung der auf die Sonde (10) angewendeten Kraft und zweite Messmittel zur Messung der Strecke, die von der länglichen Sonde (10) während eines Tests zurückgelegt wurde, beinhaltet.

28. Vorrichtung nach Anspruch 27, wobei die ersten und zweiten Messmittel angeordnet sind, um mit einem Computer zu kommunizieren, der Mittel zur Speicherung von Informationen, die die Identität jedes Testmaterials, das unter Verwendung der Apparatur untersucht wurde, betreffen und Mittel zur Speicherung vorgenommener Messungen umfasst.

29. Vorrichtung nach irgendeinem der Ansprüche 23 bis 28, wobei das Trägerelement (2) eine Well-Platte umfasst, welche einen Array von Behältern (4) beinhaltet.

## Revendications

1. Procédé d'essai d'un matériau, le procédé comprenant les étapes consistant à :
(a) fournir un organe de support (2), où ledit organe de support (2) définit au moins un réceptacle (4) pour contenir un matériau d'essai, la paroi de base (6) de l'au moins un réceptacle (4) comprenant une ouverture (8) sous la forme d'un canal, où ledit canal (8) est fermé par un moyen formant bouchon (58) avant que le matériau d'essai ne soit fourni ;
(b) fournir le matériau d'essai, à travers une région dudit organe de support (2) qui définit ladite ouverture (8), et à l'intérieur de l'au moins un réceptacle ; et
(c) déplacer un moyen d'application de force comprenant une sonde allongée (10) dont l'axe d'allongement s'étend dans la direction dans laquelle elle est agencée pour se déplacer par rapport audit matériau d'essai pour appliquer une force audit matériau d'essai ; où ladite sonde allongée (10) se déplace vers, passe dans et/ou passe à travers ledit canal (8) avant, pendant ou après l'application de ladite force audit matériau d'essai.

2. Procédé selon la revendication 1, qui comporte l'enregistrement de la force appliquée audit matériau d'essai ou d'un paramètre relatif à la force appliquée par ledit moyen d'application de force (10).

3. Procédé selon la revendication 1 ou la revendication 2, dans lequel une multiplicité de valeurs pour la force appliquée audit matériau d'essai sont enregistrées à différents moments pendant l'essai dudit matériau.

4. Procédé selon l'une quelconque des revendications précédentes, dans lequel des données relatives à la force appliquée sont enregistrées dans une base de données sous la commande d'un ordinateur, et ledit ordinateur commande également le déplacement dudit moyen d'application de force (10) par rapport audit matériau d'essai.

5. Procédé selon l'une quelconque des revendications précédentes, dans lequel ladite sonde allongée (10) applique une force qui déforme le matériau d'essai.

6. Procédé selon l'une quelconque des revendications précédentes, dans lequel ledit matériau d'essai est stationnaire pendant l'application de ladite force par ladite sonde allongée (10).

7. Procédé selon l'une quelconque des revendications précédentes, dans lequel un axe z de ladite sonde allongée (10), lequel axe définit la direction dans laquelle la sonde allongée (10) se déplace par rapport au matériau d'essai, est sensiblement aligné avec le centre de la région qui est agencée pour définir ledit canal (8), de sorte que, lorsque ladite sonde allongée (10) passe à travers le canal (8), elle passe sensiblement au centre à travers le canal (8).

8. Procédé selon l'une quelconque des revendications précédentes, dans lequel ladite sonde allongée (10) est en contact direct avec ledit matériau d'essai pour y appliquer ladite force.

9. Procédé selon l'une quelconque des revendications précédentes, qui comporte l'étape consistant à construire une relation force contre extension pour le matériau d'essai, ou une relation contrainte de traction contre déformation de traction pour le matériau d'essai.

10. Procédé selon l'une quelconque des revendications précédentes, dans lequel ledit matériau d'essai est réalisé et le procédé comporte l'étape consistant à sélectionner ledit matériau d'essai réalisé et à le positionner en travers de ladite région dudit organe de support (2) qui est agencé pour définir ledit canal (8).

11. Procédé selon l'une quelconque des revendications 1 à 10, qui comporte la sélection d'un précurseur dudit matériau d'essai, et la mise en contact dudit précurseur avec ledit organe de support (2), et la formation dudit matériau d'essai à travers ladite région de l'organe de support (2), à l'étape (b).

12. Procédé selon la revendication 11, dans lequel ledit précurseur est sous une forme physique différente, comparé audit matériau d'essai, et dans lequel ledit matériau d'essai se forme sur ledit organe de support (2) après contact du précurseur avec celui-ci.

13. Procédé selon la revendication 12, dans lequel ledit précurseur comporte au moins des premier et deuxième composants qui sont impliqués dans la formation du matériau d'essai.

14. Procédé selon la revendication 13, dans lequel, dans une série d'essais, on fait varier l'identité et/ou les quantités des premier et deuxième composants ; et/ou on fait varier les processus auxquels les premier et deuxième composants sont soumis ; et/ou on fait varier l'identité et/ou les quantités d'autres composants, en vue d'affecter les propriétés des matériaux d'essai formés.

15. Procédé selon l'une quelconque des revendications précédentes, qui est un procédé d'essai de perforation, d'essai d'impact ou d'essai d'adhérence.

16. Procédé selon la revendication 15, dans lequel un procédé d'essai de perforation comporte l'étape consistant à déplacer ladite sonde allongée (10) par rapport au matériau d'essai, de sorte que ladite sonde allongée (10) pénètre dans le matériau d'essai, dans lequel des mesures de force et d'extension sont effectuées pendant la pénétration.

17. Procédé selon la revendication 15, dans lequel un procédé d'essai d'adhérence implique la mise en contact du matériau d'essai avec une surface et ensuite le déplacement de la sonde allongée (10) par rapport au matériau d'essai pour amener le matériau d'essai à s'éloigner de la surface.

18. Procédé selon l'une quelconque des revendications précédentes, où ledit procédé comprend la fourniture d'une pluralité de matériaux d'essai à travers ledit organe de support (2), où ledit organe de support (2) définit une pluralité de réceptacles (4) pour contenir la pluralité de matériaux d'essai, la paroi de base (16) d'un réceptacle (4) comprenant un canal (8) fermé par un moyen formant bouchon (58) avant que le matériau d'essai ne soit fourni.

19. Procédé selon la revendication 18, dans lequel ledit organe de support (2) définit un réseau desdits réceptacle (4) agencés en rangées parallèles.

20. Procédé selon la revendication 19, dans lequel la même sonde allongée (10) est utilisée pour appliquer unedite force respective à chacun de ladite pluralité de matériaux d'essai à tour de rôle.

21. Procédé selon l'une quelconque des revendications 18 à 20, qui comporte l'étape consistant à déplacer ledit organe de support (2) pour permettre à ladite sonde allongée (10) d'appliquer ladite force à des premier et deuxième matériaux inclus dans ladite pluralité de matériaux d'essai.

22. Procédé selon l'une quelconque des revendications 18 à 21, dans lequel le déplacement de ladite sonde allongée (10) par rapport à chaque matériau d'essai est commandé par un ordinateur.

23. Appareil pour mettre à l'essai un matériau, l'appareil comprenant :
(i) un organe de support (2) qui définit au moins un réceptacle (4) pour contenir le matériau d'essai, la paroi de base (6) dudit au moins un réceptacle (4) comprenant une ouverture ou une pluralité d'ouvertures (8) sous la forme de canaux,
(ii) un moyen formant bouchon (58) pour fermer lesdits canaux (8) avant que le matériau d'essai ne soit fourni,
et où ledit organe de support (2) est agencé pour supporter des matériaux d'essai ; et
(iii) une sonde allongée (10) dont l'axe d'allongement s'étend dans la direction dans laquelle elle est agencée pour se déplacer, qui est mobile par rapport à l'organe de support (2), pour appliquer une force à un matériau d'essai supporté dans celui-ci en cours d'utilisation ; où ladite sonde allongée (10) est agencée pour se déplacer vers, pour passer dans et/ou pour passer à travers ledit canal ou ladite pluralité de canaux (8) en cours d'utilisation avant, pendant ou après l'application d'une force au matériau d'essai.

24. Appareil selon la revendication 23, qui comporte un ordinateur.

25. Appareil selon la revendication 24, dans lequel ledit ordinateur comporte une sortie pour commander le déplacement de la sonde allongée (10) par rapport à l'organe de support (2) ; et une entrée pour recevoir des données relatives à la force appliquée et à la réaction du matériau d'essai à la force appliquée.

26. Appareil selon l'une quelconque des revendications 24 ou 25, dans lequel ledit ordinateur commande le déplacement de l'organe de support (2) et de ladite sonde allongée (10).

27. Appareil selon l'une quelconque des revendications 23 à 26, ledit appareil comportant un premier moyen de mesure pour mesurer la force appliquée par ladite sonde allongée (10) et un deuxième moyen de mesure pour mesurer la distance parcourue par ladite sonde allongée (10) pendant un essai.

28. Appareil selon la revendication 27, dans lequel lesdits premier et deuxième moyens de mesure sont conçus pour communiquer avec un ordinateur qui comporte un moyen pour stocker des informations relatives à l'identité de chaque matériau d'essai mis à l'essai, en utilisant l'appareil et un moyen pour stocker les mesures prises.

29. Appareil selon l'une quelconque des revendications 23 à 28, dans lequel ledit organe de support (2) comprend une plaque de puits qui comporte un réseau de réceptacles (4).
